# EUROPEAN PATENT APPLICATION

(11) **EP 3 124 221 A1**
(43) Date of publication of application: **01.02.2017**
(21) Application number: 16179856.6
(22) Date of filing: 18.07.2016
(51) Int. Cl.: B29C 70/54, B29C 70/86, B29C 70/02, B29C 37/00, B29C 65/00

(54) **COMPOSITE STRUCTURE**

(30) Priority: 27.07.2015 GB 201513213
(71) Applicant: Airbus Operations Limited, Bristol BS34 7PA (GB)
(72) Inventor: PRICE, Jonathan, Bristol, BS34 7PA (GB)
(74) Representative: Ribeiro, James Michael

(57) **Abstract**

A structure (1) comprising a stack (3) of composite plies of fibre-reinforced matrix material. The structure (1) comprises a plurality of reinforcing inserts (4) and a plurality of holes (6). Each reinforcing insert (4) is embedded in the stack (3) and bonded to the stack (3) and each hole (6) passes through a respective one of the reinforcing inserts (4). A support layer (5) is joined to each reinforcing insert (4). The support layer (5) is formed from a different material to the composite plies and impregnated with the same matrix material as the composite plies. The support layer (5) carries the inserts (4) during the assembly of the structure, and can assist in a process of infusing and/or curing the stack.

## Description

### FIELD OF THE INVENTION

The present invention relates to a composite structure, and a method of manufacturing a composite structure.

### BACKGROUND OF THE INVENTION

Laminated fibre-reinforced composite structures, such as aircraft wing covers, are limited in their through-thickness capability to accommodate high load introduction. This limits the level of strain at which such structures can operate.

Traditionally such structures are mechanically fastened (for instance by bolts) to other work pieces, the bolts passing through machined holes in the structure. A traditional solution to the limited bolt-bearing capability of the structure is to locally increase its thickness at the hole locations. This can lead to an inefficient solution which adds weight and cost.

### SUMMARY OF THE INVENTION

A first aspect of the invention provides a structure comprising a stack of composite plies of fibre-reinforced matrix material. The structure comprises a plurality of reinforcing inserts and a plurality of holes, wherein each reinforcing insert is embedded in the stack and bonded to the stack and each hole passes through a respective one of the reinforcing inserts. A support layer is joined to each reinforcing insert. The support layer is formed from a different material to the composite plies and impregnated with the same matrix material as the composite plies. The support layer carries the inserts during the assembly of the structure, and can assist in a process of infusing and/or curing the stack.

The reinforcing inserts improve the fastener-bearing capability of the structure. As a result, local increases in thickness of the structure around the inserts can be avoided or at least minimised.

Typically the reinforcing inserts are co-bonded to the matrix material of the stack during a cure of the structure, rather than being secondary bonded to the stack by an adhesive which is different to the matrix material of the stack. In other words the reinforcing inserts are typically in direct contact with the matrix material of the stack.

The support layer may be at the top or bottom of the stack, but more typically it is embedded in the stack with first and second composite plies of the stack positioned on opposite sides of the porous support layer, and the first and second composite plies bonded to each reinforcing insert. Typically the support layer is located at a position of half thickness in the stack - in other word half way up the stack.

Typically the support layer is a metallic support layer.

The support layer may be a grid or mesh, a plate perforated with holes, or any other porous structure which can become impregnated with matrix material.

The inserts may pass through a full thickness of the stack, but more typically a pair of capping plies of fibre-reinforced matrix material are provided at opposite ends of the reinforcing inserts, wherein each reinforcing insert is bonded to the capping plies, and each hole passes through the pair of capping plies as well as through a respective one of the reinforcing inserts.

Typically each reinforcing insert has a side and a pair of end faces; at least two composite plies of the stack have internal edges which are bonded to the sides of the reinforcing inserts; the structure further comprises a pair of capping plies of fibre-reinforced matrix material which are bonded to the end faces of the reinforcing inserts; and each hole passes through the pair of capping plies.

The reinforcing inserts may be made of metal or any other suitable reinforcement material - for instance a polymer material such as Tufnol(R).

The fibre-reinforced matrix material is reinforced with fibres which may be carbon, glass or any other suitable fibre reinforcement material. Typically the fibre reinforcement material is different to the material forming the reinforcing inserts.

Typically the matrix material is a thermosetting material such as epoxy resin or an ester-based system. Alternatively it may be a thermoplastic material.

Typically at least two composite plies of the stack have internal edges which are bonded to the reinforcing inserts. Most preferably at least four composite plies of the stack have internal edges which are bonded to the reinforcing inserts. The internal edges are typically cut edges.

A second aspect of the invention provides a joint comprising a workpiece; and a structure according to the first aspect of the invention joined to the workpiece by fasteners such as bolts, each fastener having a shank which passes through a respective one of the holes.

A third aspect of the invention provides a method of manufacturing the structure of the first aspect of the invention, the method comprising: laying up a stack of composite plies of fibre-reinforced matrix material on a layup tool with a plurality of reinforcing inserts embedded in the stack, wherein the reinforcing inserts are carried by a porous support layer before they are embedded in the stack; heating and curing the matrix material so the reinforcing inserts become co-bonded to the stack and the porous support layer becomes impregnated with the matrix material; and after the matrix material has cured, forming a plurality of holes, each hole passing through a respective one of the reinforcing inserts.

A fourth aspect of the invention provides a method of manufacturing the structure of the first aspect of the invention, the method comprising: laying up a stack of dry fibre plies on a layup tool with a plurality of reinforcing inserts embedded in the stack, wherein the reinforcing inserts are carried by a porous support layer before they are embedded in the stack; infusing the stack of dry fibre plies with matrix material which flows into contact with the reinforcing inserts and impregnates the porous support layer; curing the matrix material so that the reinforcing inserts become co-bonded to the stack; and after the matrix material has cured, forming a plurality of holes, each hole passing through a respective one of the reinforcing inserts.

Forming the holes in the reinforcement inserts after the matrix material has cured ensures that matrix material does not flow into the holes. It also enables the holes to be formed in any capping plies at the same time.

Typically the holes are formed by the removal of material - for instance by a machining process such as drilling.

Typically the entire stack is cured at the same time as the reinforcing inserts become co-bonded to the matrix material. In other words, there is no need for two separate cure cycles - one to cure the stack and another to form the bond with the reinforcing inserts.

Typically the matrix material flows into intimate contact with the reinforcing inserts before it cures so that the reinforcing inserts become co-bonded to the matrix material.

Optionally the composite or dry fibre plies are pre-formed with holes to accommodate the reinforcing inserts before the reinforcement inserts are embedded in the stack. These holes may be pre-formed by cutting.

The reinforcement inserts may be embedded in the stack after some or all of the plies have been laid up onto the layup tool, or they may become embedded in the stack as the plies are laid up onto the layup tool.

The reinforcement inserts may be embedded in the stack by inserting them into pre-formed holes in the stack and/or by laying composite or dry fibre plies onto the layup tool so that the inserts are received in pre-formed holes in the plies as they are laid onto the layup tool.

The reinforcing inserts carried by the porous support layer may be embedded in the stack one-by-one, but more typically they are simultaneously embedded in the stack.

The porous support layer may be at a top or bottom of the stack of composite or dry fibre plies, but more typically the porous support layer is embedded in the stack with first and second plies of the stack positioned on opposite sides of the porous support layer, and the first and second plies become co-bonded to the reinforcing insert as the matrix material cures.

The reinforcing inserts may be joined to the porous support layer before the reinforcing inserts are embedded in the stack by welding or any other suitable method.

Typically the matrix material is a thermosetting material such as epoxy resin or an ester-based system which is cured by the action of heat. Alternatively it may be a thermoplastic material which is cured by allowing it to cool down and solidify.

### BRIEF DESCRIPTION OF THE DRAWINGS

Embodiments of the invention will now be described with reference to the accompanying drawings, in which:
Figure 1 is a cross sectional view of a structure according to an embodiment of the invention;
Figures 2-4 show initial steps in a method of manufacturing the structure of Figure 1;
Figure 5 is a plan view of a support grid;
Figures 6-8 show the final steps of the method of manufacturing the structure of Figure 1;
Figure 9 is a plan view of the structure of Figure 1;
Figure 10 shows an alternative method of manufacturing a structure, using a dowel pin;
Figure 11 shows part of a joint incorporating the structure of Figure 1;
Figure 12 is a plan view showing more of the joint of Figure 11; and
Figure 13 is a cross sectional view of a structure according to a further embodiment of the invention, with no capping plies.

### DETAILED DESCRIPTION OF EMBODIMENT(S)

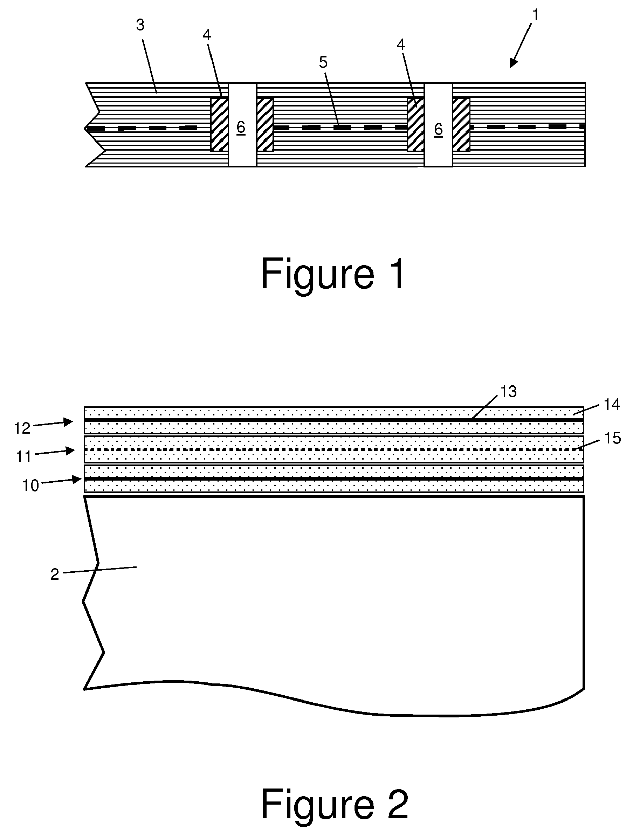

Figure 1 shows a structure 1 comprising a stack 3 of composite plies of fibre-reinforced matrix material. Cylindrical reinforcing inserts 4 are embedded in the stack 3 and bonded to the stack 3. A hole 6 passes though each reinforcing insert 4.

Figure 2 shows a first stage in a method of manufacturing the structure 1. Three capping plies 10-12 are first laid up on a layup tool 2. Each capping ply 10-12 is a so-called "pre-preg" consisting of a layer of reinforcement fibres pre-impregnated with epoxy resin matrix material. In this example each reinforcement layer is a layer of uni-directional carbon fibres, although alternatively the fibres may be woven or non-crimped. The carbon fibres in the upper capping ply 12 run in the plane of the cross-section of Figure 2 and indicated at 13, and the epoxy resin matrix material of this upper capping ply 12 is indicated at 14. The carbon fibres in the capping ply 11, on the other hand, run transverse to the plane of the cross-section and are indicated at 15. The direction of the uni-directional fibres is selected according to the structural properties required. In the example of Figure 2 the uni-directional fibres of the plies 10, 12 are running in the same direction, and the fibres of the capping ply 11 are running transverse to that direction. Further plies may be provided in which the fibres run at +/-45 degrees as is well known in the art. In this example, three capping plies 10-12 are shown but in general any number of capping plies may be laid up, including only a single capping ply.

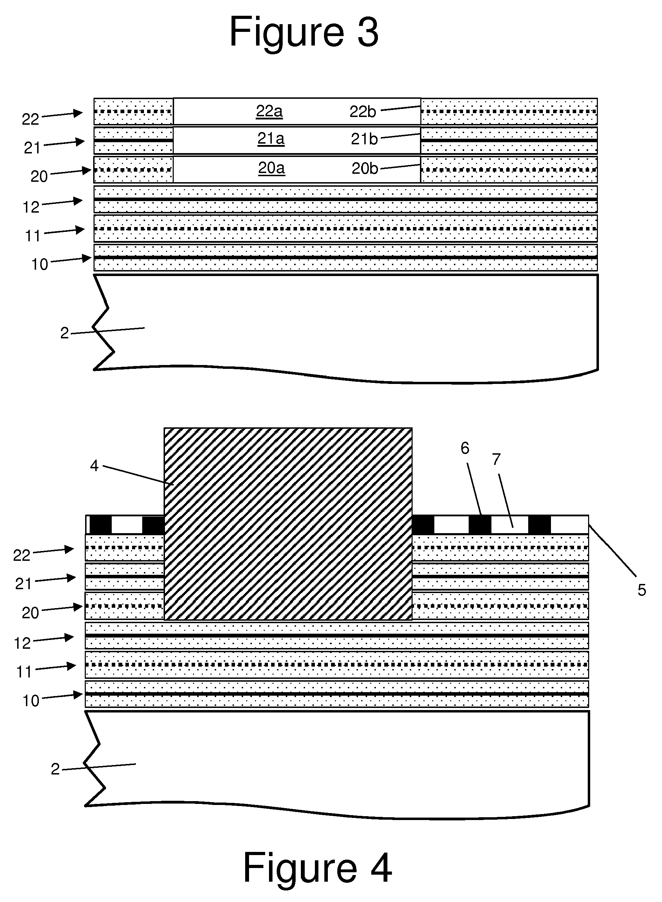

Figure 3 shows the next stage in the method of manufacture. Three internal composite plies 20-22 are laid up one-by-one on top of the capping ply 12. A circular hole 20a-22a is pre-cut in each ply 20-22 with an ultrasonic knife or other ply cutting tool. Each ply 20-22 has a circular internal cut edge 20b-22b at the edge of the hole. The plies 20-22 are laid up with the holes 20a-22a aligned as shown in Figure 3.

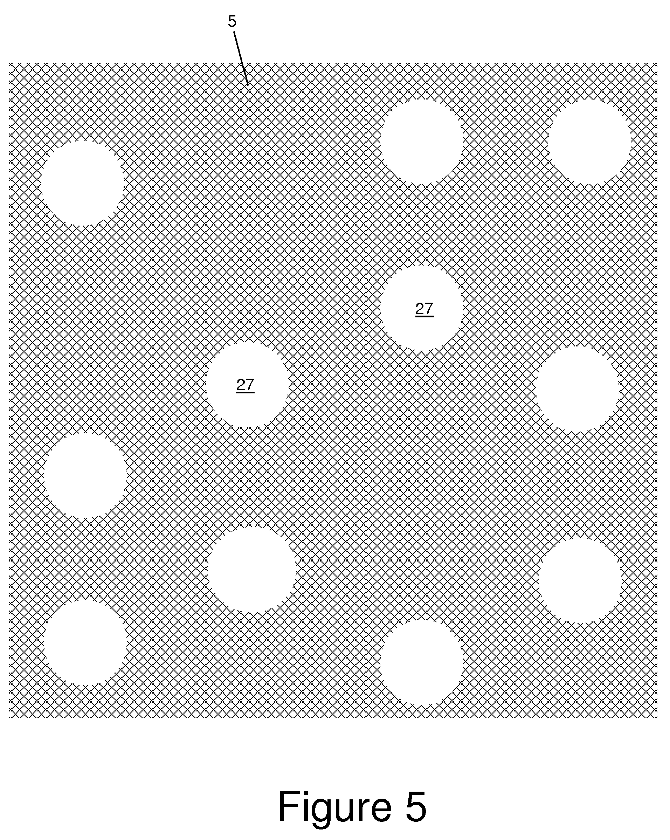

The next manufacturing stage is shown in Figure 4. A porous metal support grid 5 shown in plan in Figure 5 is cut with a plurality of holes 27 in desired locations. A cylindrical metal reinforcing insert 4 is then fitted into each hole 27 and welded to the grid 5. The support grid 5 is shown in cross section in Figure 4, and comprises a network of metal struts 6 separated by pores 7. The size of the struts 6 and the pores 7 may vary from that shown. The support grid 5 supports the inserts 4 as each insert 4 is simultaneously fitted into a respective aligned set 20a-22a of holes in the internal plies 20-22 as shown in Figure 4. When the inserts 4 are fully inserted, the support grid 5 contacts the upper internal ply 22.

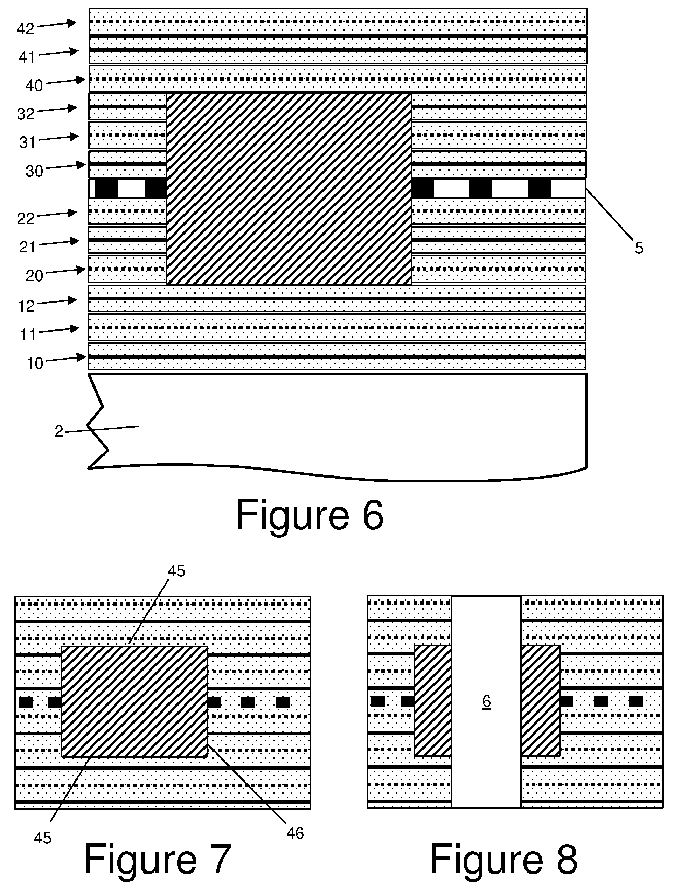

The next stage is shown in Figure 6. A second set of three internal composite plies 30-32 are laid on top of the support grid 5. The plies 30-32 have pre-cut holes (like the holes 20a-22a in the first set) and the reinforcing inserts 4 are received in these holes as the plies 30-32 are laid up one-by-one. Three capping plies 40-42 are then laid on top of the reinforcing inserts.

Next, a vacuum bag is laid over the stack and evacuated to compress the stack, which is then heated so that the thermosetting epoxy resin matrix material melts and then cures to provide the consolidated structure shown in Figure 7. The melted matrix material coalesces between the plies and then bonds the plies together by co-curing. The heating of the matrix material also causes the matrix material to impregnate the pores 7 in the support grid 5 as shown in Figure 7. The matrix material also flows into intimate contact with the reinforcing inserts 4, so that the capping plies 12, 40 become co-bonded to the end faces 45 of the reinforcing inserts and the circular internal cut edges of the internal plies 20-22, 30-32 become co-bonded to the cylindrical sides 46 of the reinforcing inserts as the matrix material cures.

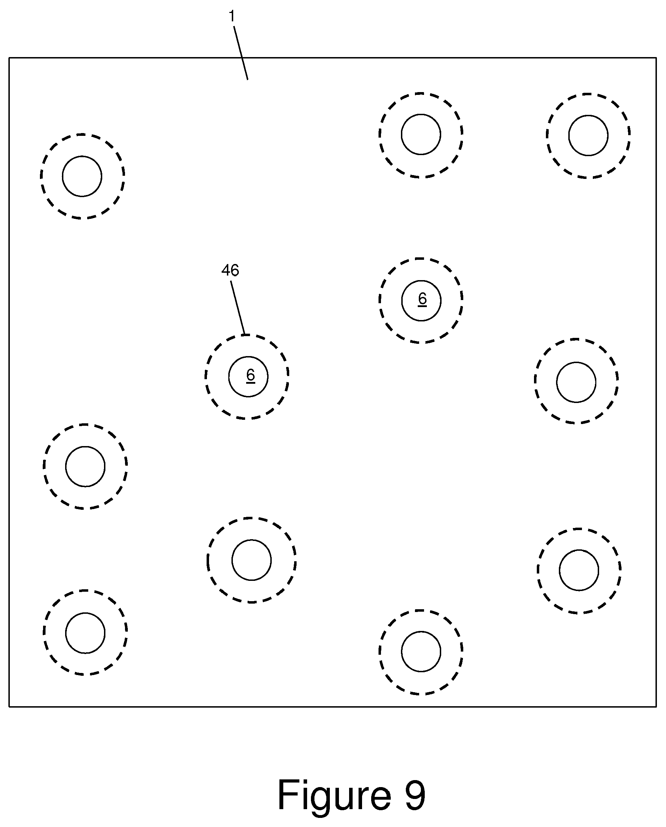

In a final manufacturing step shown in Figure 8, holes 6 are drilled through the structure, each hole 6 passing through the upper capping plies 30-32, a respective one of the reinforcing inserts 4, and the lower capping plies 10-12. As shown in Figure 9, the holes 6 are circular, and concentric with the cylindrical sides 46 of the embedded reinforcing inserts which are shown in dashed line Figure 9.

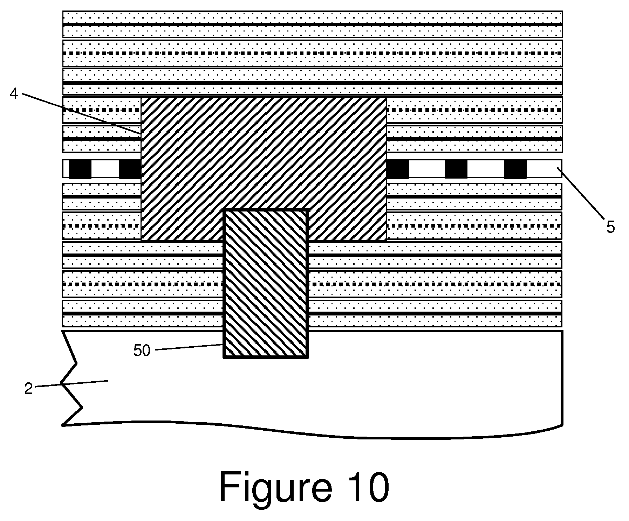

Figure 10 shows a cross sectional view through an alternative structure which is similar to the structure of Figure 1, except a cylindrical dowel pin 50 is provided for each insert. Dowel pins are inserted into suitably positioned cylindrical recesses in the upper surface of the layup tool 2. The lower capping plies are laid up onto the dowel pins (the capping plies being pre-formed with suitably positioned holes to accommodate the dowel pins) and each reinforcing insert 4 similarly has a downwardly facing recess which receives the upper end of a respective one of the cylindrical dowel pins as shown in Figure 10. The dowel pins are left in-situ during the curing process and then drilled out when the holes 6 are drilled.

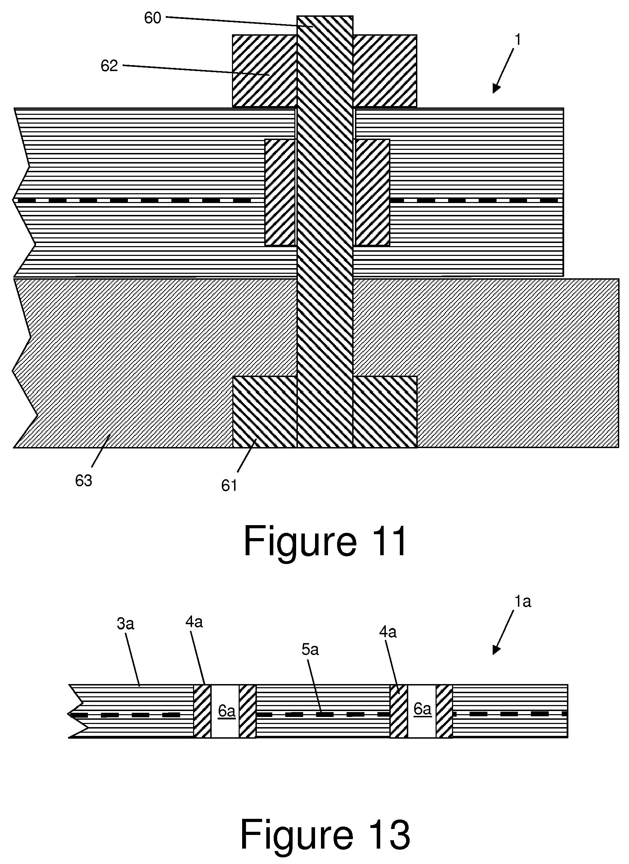

Figure 11 shows part of a joint incorporating the structure of Figure 1. The structure 1 is joined to a metal work piece 63 by a bolt having a shank 60 which passes through the hole 6 and through the work piece 63 as shown in Figure 11. The fastener has a head 61 which is countersunk within the work piece and a tail fitted with a nut 62 as shown in Figure 11. By way of example, the structure 1 may be an aircraft wing cover, and the work piece 63 may be a main landing gear structure or engine pylon structure.

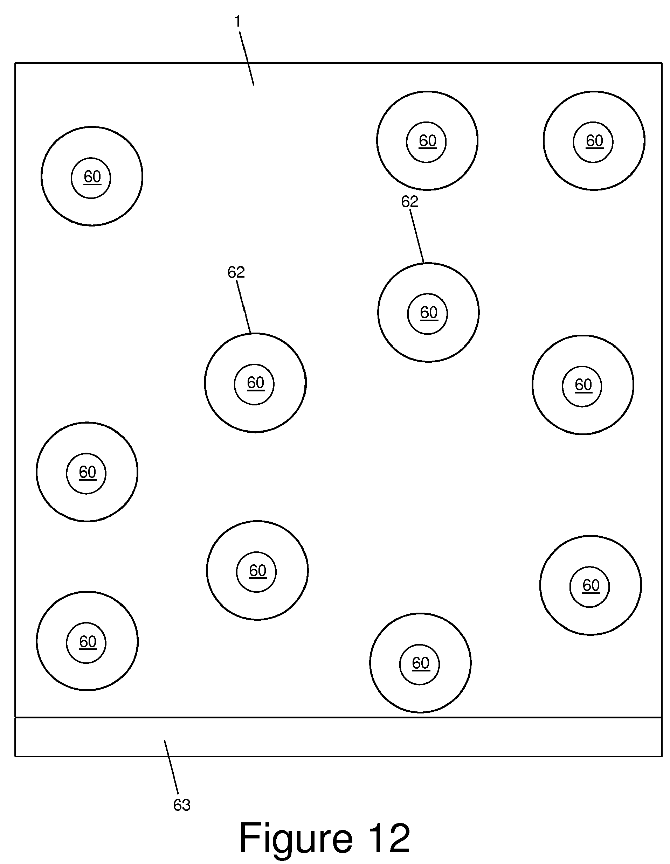

Figure 11 is an enlarged view of the joint showing only a single fastener 60-62, whereas Figure 12 is an expanded view showing the structure 1 joined to the workpiece 63 by a plurality of fasteners, each fastener having a shank 60 which passes through a respective one of the inserts.

Figure 13 shows an alternative structure 1a which is similar to the structure 1 of Figure 1, except that there are no capping plies. The features of the structure of Figure 12 are otherwise identical and are labelled with the same reference numerals with the letter "a" added. Thus the structure of Figure 12 will not be described in any further detail.

The method described above with reference to Figures 2-8 forms a structure 1 using pre-preg composite plies, but in an alternative method of manufacturing the structure of Figure 1, a resin infusion method may be used. Rather than laying up pre-pregs onto the layup tool, a stack of dry fibre plies is laid up in a similar manner with embedded reinforcing inserts 4. After the stack has been assembled, it is infused with epoxy resin matrix material which flows into contact with the reinforcing inserts and impregnates the support grid 5. The porous support grid 5 assists the flow of the matrix material through the thickness of the stack during the infusion process. So when the resin infusion method is used, the grid 5 provides two distinct advantages: firstly it provides a convenient means of installing the reinforcing inserts accurately and in a single step, and secondly it provides an aid to the resin infusion process.

In the example given above, the holes 6 are clearance drilled but in an alternative embodiment the holes 6 may be formed with a thread to receive an externally threaded fastener shank.

Although the joint of Figures 11 and 12 joins a composite structure 1 to a metal work piece, the joint may be formed with any other work piece, including a similar composite structure with reinforcing metal inserts.

Although the invention has been described above with reference to one or more preferred embodiments, it will be appreciated that various changes or modifications may be made without departing from the scope of the invention as defined in the appended claims.

## Claims

1. A structure comprising a stack of composite plies of fibre-reinforced matrix material; a plurality of reinforcing inserts, wherein each reinforcing insert is embedded in the stack and bonded to the stack; a plurality of holes, wherein each hole passes through a respective one of the reinforcing inserts; and a support layer which is joined to each reinforcing insert, wherein the support layer is formed from a different material to the composite plies and impregnated with the same matrix material as the composite plies.

2. The structure of claim 1, wherein the support layer is embedded in the stack with first and second composite plies of the stack positioned on opposite sides of the support layer, and the first and second composite plies are bonded to each reinforcing insert.

3. The structure of claim 1 or 2, wherein the support layer is a metallic support layer.

4. The structure of any preceding claim, further comprising a pair of capping plies of fibre-reinforced matrix material at opposite ends of the reinforcing inserts, wherein each reinforcing insert is bonded to the capping plies, and each hole passes through the pair of capping plies.

5. The structure of any preceding claim, wherein each reinforcing insert is a metallic reinforcing insert.

6. The structure of any preceding claim, wherein at least two composite plies of the stack have internal edges which are bonded to the reinforcing inserts.

7. The structure claim 1, wherein each reinforcing insert has a side and a pair of end faces; at least two composite plies of the stack have internal edges which are bonded to the sides of the reinforcing inserts; the structure further comprises a pair of capping plies of fibre-reinforced matrix material which are bonded to the end faces of the reinforcing inserts; and each hole passes through the pair of capping plies.

8. The structure of any preceding claim, wherein the support layer is a grid, a mesh, or a perforated plate.

9. A joint comprising a workpiece; and a structure according to any preceding claim joined to the workpiece by a plurality of fasteners, each fastener having a shank which passes through a respective one of the holes.

10. A method of manufacturing the structure of claim 1, the method comprising: laying up a stack of composite plies of fibre-reinforced matrix material on a layup tool with a plurality of reinforcing inserts embedded in the stack, wherein the reinforcing inserts are carried by a porous support layer before they are embedded in the stack; heating and curing the matrix material so the reinforcing inserts become co-bonded to the stack and the porous support layer becomes impregnated with the matrix material; and after the matrix material has cured, forming a plurality of holes, each hole passing through a respective one of the reinforcing inserts.

11. A method of manufacturing the structure of claim 1, the method comprising: laying up a stack of dry fibre plies on a layup tool with a plurality of reinforcing inserts embedded in the stack, wherein the reinforcing inserts are carried by a porous support layer before they are embedded in the stack; infusing the stack of dry fibre plies with matrix material which flows into contact with the reinforcing inserts and impregnates the porous support layer; curing the matrix material so that the reinforcing inserts become co-bonded to the stack; and after the matrix material has cured, forming a plurality of holes, each hole passing through a respective one of the reinforcing inserts.

12. The method of claim 10 or 11 wherein the porous support layer is embedded in the stack with first and second plies of the stack positioned on opposite sides of the porous support layer, and the first and second plies become co-bonded to the reinforcing inserts as the matrix material cures.

13. The method of claim 10, 11 or 12 wherein the reinforcing inserts carried by the porous support layer are simultaneously embedded in the stack.

14. The method of claim 10, 11, 12 or 13 further comprising joining the reinforcing inserts to the porous support layer before the reinforcing inserts are embedded in the stack.

15. The method of claim 14 wherein the reinforcing inserts are joined to the porous support layer by welding.
